# EUROPEAN PATENT APPLICATION

(11) **EP 3 771 372 A1**
(43) Date of publication of application: **03.02.2021**
(21) Application number: 20156307.9
(22) Date of filing: 10.02.2020
(51) Int. Cl.: A47J 36/32, G06Q 20/32

(54) **VISION RECOGNITION BASED METHOD AND DEVICE FOR CONTROLLING COOKER**

(30) Priority: 30.07.2019 KR 20190092549
(71) Applicant: LG Electronics Inc., 07336 SEOUL (KR)
(72) Inventor: CHUNG, Cherylyn, 02844 Seoul (KR); KANG, Pil Suk, 06964 Seoul (KR); KIM, Young Tak, 15509 Gyeonggi-do (KR); PARK, Jin Woo, 07694 Seoul (KR); LEE, Jung Hyun, 08771 Seoul (KR)
(74) Representative: Vossius & Partner Patentanwälte Rechtsanwälte mbB

(57) **Abstract**

A cooker control device and a cooker control method are disclosed. The cooker control method includes: recognizing a cooking ingredient based on vision recognition, inputting cooking information, and transmitting a cooking instruction corresponding to a detected recipe. According to the present disclosure, a cooker which cooks the recognized cooking ingredient may be controlled using an artificial intelligence (AI) model which performs machine learning (ML) through a 5G network.

## Description

### CROSS-REFERENCE TO RELATED APPLICATION

Pursuant to 35 U.S.C. § 119(a), this application claims the benefit of earlier filing date and right of priority to Korean Patent Application No. 10-2019-0092549, filed on July 30, 2019, the contents of which are hereby incorporated by reference herein in its entirety.

### BACKGROUND

### 1. Technical Field

The present disclosure relates to a vision recognition based method and device for controlling a cooker, and more particularly, to a method of recognizing cooking ingredients based on vision recognition and controlling a cooker such as an electric oven or a microwave during a cooking process of the recognized ingredients for cooking and a cooker control device performing the method.

### 2. Description of the Related Art

Recently, the increased consumption of home meal replacement (HMR) has led to the growth of a market of electric cookers such as microwaves, electric ovens, and air fryers.

The HMR was created generally with a goal for reducing a time and efforts required to proceed the processes of purchasing food materials, trimming(grooming) the food materials, cooking, eating foods, and cleaning the table when eating food at home. The HMR is a general term which refers to products which are processed and packed in an incompletely cooked state so that the food is done by a simple cooking process such as heating, boiling or etc.

The HMR is largely classified into four types. Ready to prepared (RTP) refers to a product which is cleaned and is divided into small amounts to be conveniently cooked, such as sub-divided vegetables for cooking, and Ready to eat (RTE) refers to foods which can be eaten immediately after purchasing, such as side dishes, vegetables, kimchi, salad, sandwich, and gimbap which is a Korean style food.

Ready to cook (RTC) refers to foods which can be simply cooked to be eaten, such as frozen dumplings, frozen pork cutlet, and marinated grilled beef or pork ribs, and Ready to heat (RTH) refers to foods which can be simply heated by a microwave to be eaten, such as Hetbahn which is a Korean instant rice, instant soups, frozen pizzas, or retort pouches (soups or 3-minute curry which is a Korean instant curry).

Among the types of home meal replacement, RTP, RTC, and RTH require a cooker, for example, an electric cooker. RTP is generally called meal kits and includes a room temperature meal kit, a chilled meal kit, and a frozen meal kit.

In the meantime, the cooker controls the cooking based on cooking ingredients using various operating methods. However, a user does not select an operating method in accordance with the cooking ingredient due to lack of knowledge for a cooking instruction corresponding to a recipe of the cooking ingredient or for the convenience, but selects a simple operating method based on the cooking time. Thus, there is a disadvantage in that a recipe recommended for the cooking ingredient is not applied during a cooking process using a cooker.

Further, according to the related art, there is a difficulty to input a cooking method for a cooking ingredient which does not have a barcode.

As a related art, a method for generating recipe information of a mobile terminal is disclosed in Korean Patent Application Publication No. 10-2015-0048529. According to this related art, a recipe is generated using an image which is received by means of a camera by a recipe information generating function.

As another related art, an electric oven provided with a self-recipe program and a control method thereof is disclosed in Korean Patent Application Publication No. 10-2017-0022077. According to the related arts, recipe information in accordance with the cooking method may be generated or a recipe program may be reset.

In contrast, exemplary embodiments of the present disclosure have distinct features from the related arts in that a corresponding recipe is detected by recognizing a cooking ingredient based on vision recognition and a cooker is controlled using a cooking instruction corresponding to the detected recipe.

### [Related Art Document]

### [Patent Document]

Korean Patent Application Publication No. 10-2015-0048529 (published on May 7, 2015)
Korean Patent Application Publication No. 10-2017-0022077 (published on March 2, 2017)

### SUMMARY

An object of the present disclosure is to solve the problem of the related art in that cooking ingredient information without a barcode cannot be input.

Another object of the present disclosure is to solve the problem caused by the usage of a cooker which has been used in accordance with a parameter setting based on a cooking time, rather than a cooking function.

Another object of the present disclosure is to solve the problem of the related art in that a user does not cook a convenience food and a meal kit according to a recipe.

Problems to be solved by the present disclosure are not limited to the above-mentioned problems and other objects and advantages of the present disclosure which are not mentioned above may be more apparent by the exemplary embodiments of the present disclosure. Further, it is understood that the objects and advantages of the present disclosure may be embodied by the means and a combination thereof in the claims.

A vision recognition based cooker control method according to an exemplary embodiment of the present disclosure is performed by a cooker control device which controls a visually recognized cooking ingredient so as to be cooked according to a recipe.

The vision recognition based cooker control method is configured to include recognizing a cooking ingredient based on vision recognition, inputting cooking ingredient information, detecting a corresponding recipe based on the cooking ingredient or the cooking ingredient information, and controlling an operation of a cooker in accordance with a cooking instruction corresponding to the recipe.

Further, the recognizing of a cooking ingredient may be configured to include: determining a category of the cooking ingredient among categories including at least a convenience food, a meal kit, and a raw food material, in accordance with a processed degree; and recognizing an ID of a product based on a packaging design of the convenience food or the meal kit or recognizing the raw food material.

Further, the inputting of cooking ingredient information may be configured to include a code for distinguishing the cooking ingredient or raw food material information from the user.

The vision recognition based cooker control method is configured to further include inputting information on a cooker to be used for cooking.

Further, the controlling of an operation of a cooker may be configured to include displaying a UI for executing the cooking instruction corresponding to the recipe, and transmitting the cooking instruction in accordance with the execution to the cooker using wireless communication.

The controlling of an operation of a cooker may be configured to include displaying a cooking code corresponding to the recipe and inputting the cooking code to execute the cooking instruction in accordance with user's input.

The cooking instruction may correspond to an instruction to execute a cooking program stored in the cooker, corresponding to the recipe or at least one operating instruction regarding an operating method of the cooker included in a program stored in a cooker control device, corresponding to the recipe.

Further, the controlling of an operation of a cooker in accordance with a cooking instruction may be configured to include displaying a UI for changing a cooking time after transmitting a primary cooking instruction to the cooker; and transmitting a secondary cooking instruction for shortening or extending the cooking time depending on the selection of the user.

Further, the recognizing of a cooking ingredient may be configured to include: displaying a past cooking history based on vision recognition. Further, the controlling of an operation of a cooker may be configured to include transmitting a cooking instruction of a cooking item selected by the user from the past cooking history to the cooker.

Further, the controlling of an operation of a cooker may be configured to include transmitting to a cooker a cooking instruction determined by an artificial intelligence model in accordance with a user's favorite cooking pattern deduced by data learning for a past cooking history including parameter information selected or modified by a user during a cooking process using at least one of a convenience food, a meal kit, and a raw food material.

The vision recognition based cooker control method may further include at least one of: displaying expiration date information, health information, and additional information for the cooking ingredient, providing purchase information of the cooking ingredient to the user, and displaying the recipe. Here, the recipe may be displayed by at least one of displaying through a text or a video before starting the cooking; and displaying explanation for sub-steps configuring a cooking process in accordance with the cooking progress.

A vision recognition based cooker control device according to an exemplary embodiment of the present disclosure includes: a user input interface which receives cooking ingredient information; a processor which recognizes a cooking ingredient based on vision recognition and detects a corresponding recipe based on the cooking ingredient or the information; and a communicator which communicates with at least one of the cooker, and a server which relays the control of the cooker. The processor may control transmission of a cooking instruction corresponding to the recipe to the cooker.

The processor may determine a category of the cooking ingredient among categories at least including a convenience food, a meal kit, and a raw food material, in accordance with a processed degree; and recognize an ID of a product based on packaging designs of the convenience food and the meal kit or recognizes the raw food material.

The user input interface may receive a code for distinguishing cooking ingredients or raw food material information from the user.

The vision recognition based cooker control device may further include a display which displays a UI for executing the cooking instruction corresponding to the recipe. The processor may control transmission of a cooking instruction in accordance with the execution.

The vision recognition based cooker control device may further include a display which displays the cooking code corresponding to the recipe to input the cooking code to the cooker.

The vision recognition based cooker control device may further include a display which displays a UI for changing a cooking time after transmitting a primary cooking instruction to the cooker. Further, the processor may control the transmission of a secondary cooking instruction for shortening or extending the cooking time depending on the selection of the user, to the cooker.

The vision recognition based cooker control device may further include a display which displays a past cooking history based on vision recognition, and the processor may control the transmission of a cooking instruction of a cooking item selected by the user from the past cooking history to the cooker.

The processor may control the transmission of a cooking instruction determined by an artificial intelligence model in accordance with a user's favorite cooking pattern deduced by data learning for a past cooking history including parameter information selected or modified by a user during a cooking process using at least one of a convenience food, a meal kit, and a raw food material, to the cooker.

The vision recognition based cooker control device may further include a display which displays various information on the control of the cooker. The processor may control the display to display at least one of expiration date information, health information, and additional information for the cooking ingredient, purchase information for the cooking ingredient, and the recipe. Further, the processor may control the display to display at least one of the recipe and explanation for sub steps configuring a cooking process in accordance with the cooking progress, through a text or a video before starting the cooking.

A method for controlling a cooker, the method comprises recognizing a cooking ingredient based on visual recognition or receiving cooking ingredient information; detecting a recipe based on the cooking ingredient or the cooking ingredient information; and controlling an operation of the cooker according to a cooking instruction corresponding to the detected recipe.

The recognizing the cooking ingredient comprises determining a category of the cooking ingredient among categories including at least a convenience food, a meal kit, and a raw food material based on a processed degree; and recognizing an identification (ID) of a product based on a visually recognized packaging design of the convenience food or the meal kit or recognizing the raw food material.

The receiving the cooking ingredient information comprises receiving a code for distinguishing the cooking ingredient; or receiving raw food material information from a user.

The method further comprises receiving information about the cooker to be used for cooking.

The controlling the operation of the cooker comprises displaying a user interface (UI) for executing the cooking instruction corresponding to the recipe; and transmitting the cooking instruction received via the UI to the cooker.

The controlling the operation of the cooker comprises displaying a cooking code corresponding to the recipe; and inputting the cooking code for executing the cooking instruction according to a user input received in response to the displayed cooking code.

The cooking instruction causes execution of a cooking program stored in the cooker; or the cooking instruction is at least one operating instruction regarding an operating method of the cooker included in a program stored in the control device.

The controlling the operation of the cooker comprises displaying a user interface (UI) for changing a cooking time after transmitting a primary cooking instruction to the cooker; and transmitting a secondary cooking instruction for shortening or extending a cooking time based on a user input received via the UI.

The recognizing the cooking ingredient comprises displaying a past cooking history based on vision recognition; and the controlling the operation of the cooker comprises transmitting a cooking instruction of a cooking item selected by a user from the past cooking history to the cooker.

The controlling the operation of the cooker comprises transmitting a cooking instruction determined by an artificial intelligence model to the cooker according to a user's favorite cooking pattern deduced by data learning for a past cooking history including parameter information selected or modified by the user during a cooking process using at least one of a convenience food, a meal kit, or a raw food material.

The method further comprises at least one of displaying at least expiration date information and health information of the cooking ingredient; providing purchase information for the cooking ingredient to a user; or displaying the recipe, wherein the recipe is displayed by at least one of: displaying the recipe as a text or a video before cooking starts; or displaying an explanation for sub-steps configuring a cooking process in accordance with a cooking progress.

A device configured to control a cooker comprises a user input interface configured to receive cooking ingredient information; a communicator configured to communicate with at least one of the cooker or a server which relays control of the cooker; and a processor configured to: recognize a cooking ingredient based on vision recognition; detect a corresponding recipe based on the cooking ingredient or the cooking ingredient information; and control transmission of a cooking instruction corresponding to the recipe to the cooker.

The processor is further configured to determine a category of the cooking ingredient among categories including at least a convenience food, a meal kit, and a raw food material based on a processed degree; and recognize an identification (ID) of a product based on a visually recognized packaging design of the convenience food or the meal kit or recognize the raw food material.

The user input interface is further configured to receive a code for distinguishing the cooking ingredient; or receive raw food material information from a user.

The device further comprises a display configured to display a user interface (UI) for executing the cooking instruction corresponding to the recipe, wherein the processor is further configured to control the transmission of the cooking instruction to the cooker in response to a user input received via the UI.

The device further comprises a display configured to display a cooking code corresponding to the recipe to input the cooking code to the cooker.

The device further comprises a display, wherein the processor is further configured to: cause the display to display a user interface (UI) for changing a cooking time after transmitting a primary cooking instruction to the cooker; and control transmission of a secondary cooking instruction for shortening or extending a cooking time to the cooker based on a user input received via the UI.

The device further comprises a display, wherein the processor is further configured to: cause the display to display a past cooking history based on vision recognition; and control transmission of a cooking instruction for a cooking item, which is selected by a user from the past cooking history, to the cooker.

The cooking instruction is determined by an artificial intelligence model according to a user's favorite cooking pattern deduced by data learning for a past cooking history including parameter information selected or modified by the user during a cooking process using at least one of a convenience food, a meal kit, or a raw food material.

The device further comprises a display configured to display various information regarding the control of the cooker, wherein the processor is further configured to: cause the display to display at least one of: at least expiration date information and health information; purchase information for the cooking ingredient; or the recipe; and cause the display to display the recipe by at least one of: displaying the recipe as a text or a video before cooking starts; or displaying an explanation for a sub-step configuring a cooking process in accordance with a cooking progress.

According to the present disclosure, it is possible to recognize the cooking ingredient of a convenience food and a meal kit using vision recognition and cook using the cooking ingredient according to a detected recipe.

Further, in addition to the cooking method according to a recipe of the cooking ingredient, detailed information and purchase information about the cooking ingredient may be provided to the user.

Further, a cooker control device may indirectly or directly control the operation of the cooker via a server using wireless communication.

### BRIEF DESCRIPTION OF THE DRAWINGS

The foregoing and other aspects, features, and advantages of the invention, as well as the following detailed description of the embodiments, will be better understood when read in conjunction with the accompanying drawings. For the purpose of illustrating the present disclosure, there is shown in the drawings an exemplary embodiment, it being understood, however, that the present disclosure is not intended to be limited to the details shown because various modifications and structural changes may be made therein without departing from the idea of the present disclosure and within the scope and range of equivalents of the claims. The use of the same reference numerals or symbols in different drawings indicates similar or identical items.

The above and other aspects, features, and advantages of the present disclosure will become apparent from the detailed description of the following aspects in conjunction with the accompanying drawings, in which:
FIG. 1 is an exemplary diagram for explaining a vision recognition based cooker control method according to an exemplary embodiment of the present disclosure and a cooker control device using the method;
FIG. 2 is an exemplary diagram of a network environment connected to a vision recognition based cooker control device according to an exemplary embodiment of the present disclosure;
FIG. 3 is a block diagram of a vision recognition based cooker control device according to an exemplary embodiment of the present disclosure;
FIG. 4 is a block diagram of a cooker according to an exemplary embodiment of the present disclosure;
FIG. 5 is a block diagram illustrating components of a memory in which some components of FIG. 3 are omitted;
FIG. 6 is a block diagram of a server corresponding to a learning device of an artificial intelligence model according to an exemplary embodiment of the present disclosure;
FIG. 7 is a flowchart of a vision recognition based cooker control method according to an exemplary embodiment of the present disclosure;
FIG. 8 is an exemplary diagram of vision recognition using an artificial intelligence model according to an exemplary embodiment of the present disclosure;
FIG. 9 is an exemplary diagram of an example which uses a cooking history according to an exemplary embodiment of the present disclosure;
FIG. 10 is an exemplary diagram of an example which displays purchase information of a cooking ingredient according to an exemplary embodiment of the present disclosure;
FIG. 11 is a flowchart of data of a vision recognition based cooker control method according to an exemplary embodiment of the present disclosure;
FIG. 12 is a flowchart of data of a vision recognition based cooker control method according to an exemplary embodiment of the present disclosure; and
FIG. 13 is a flowchart of data of a vision recognition based cooker control method according to an exemplary embodiment of the present disclosure.

### DETAILED DESCRIPTION

Hereinafter, exemplary embodiments disclosed the present invention will be described in detail with reference to the accompanying drawings, and the same or similar components are denoted by the same reference numerals regardless of reference numerals, and repeated description thereof will be omitted. Further, such as "module" and a "unit", suffixes for components used in the following description may be adopted or mixedly used by considering easiness in preparing a specification and do not have a meaning or role distinguished from each other in themselves. Further, in describing the exemplary embodiment disclosed in the present specification, when it is determined that a detailed description of a related publicly known technology may obscure the gist of the uexemplary embodiment disclosed in the present specification, the detailed description thereof will be omitted. Further, the accompanying drawings are provided for more understanding of the embodiment disclosed in the present specification, but the technical idea disclosed in the present invention is not limited by the accompanying drawings. It should be understood that all changes, equivalents, and alternatives included in the idea and the technical scope of the present invention are included.

Terms including an ordinary number, such as first and second, are used for describing various constituent elements, but the constituent elements are not limited by the terms. The above terms are used only to discriminate one component from the other component.

It should be understood that, when it is described that an element is "coupled" or "connected" to another element, the element may be directly coupled or directly connected to the other element or coupled or connected to the other element through another intermediate element. In contrast, it should be understood that, when it is described that an element is directly coupled or directly connected to another element, no element is present between the element and the other element.

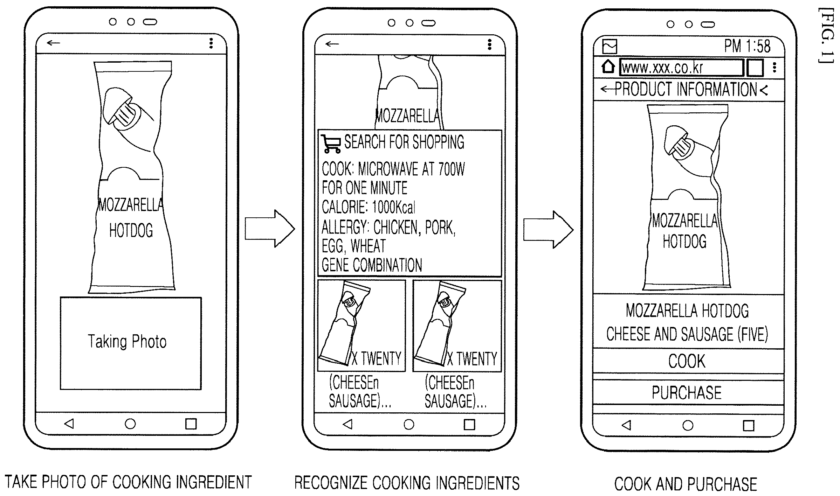

FIG. 1 is an exemplary diagram for explaining a vision recognition based cooker control method according to an exemplary embodiment of the present disclosure and a cooker control device using the same.

Referring to FIG. 1, according to a cooker control method performed by a vision recognition based cooker control device according to an exemplary embodiment of the present disclosure, cooking ingredients are photographed using a camera, recognized by vision recognition of the photographed image, and the cooking ingredients may be cooked, and purchase information of the cooking ingredients may also be provided.

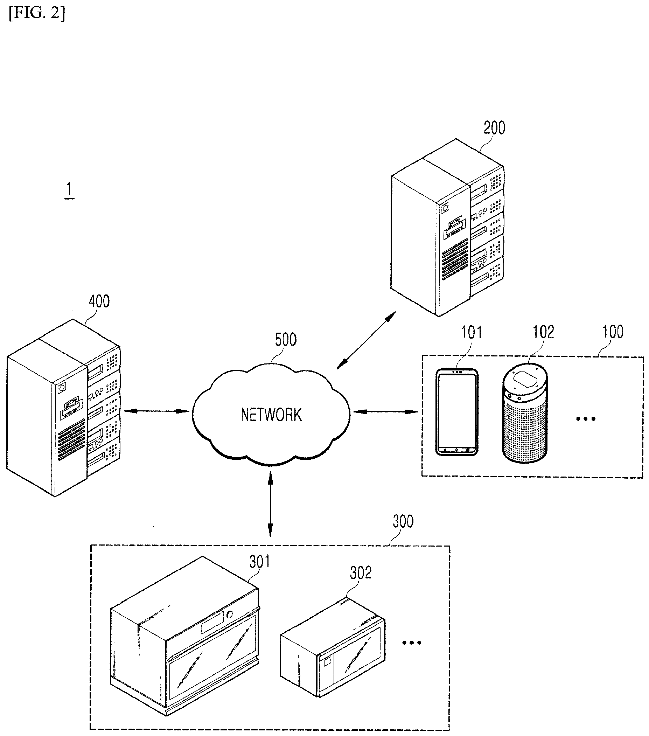

FIG. 2 is an exemplary diagram of a network environment connected to a vision recognition based cooker control device according to an exemplary embodiment of the present disclosure.

Referring to FIG. 2, equipment or user equipment 101 and an artificial intelligence (AI) assistant speaker 102 serving as a vision recognition based cooker control device 100 according to an exemplary embodiment of the present disclosure, an electric oven 301 and a microwave 302 serving as a cooker 300, and various servers 200 and 400 are connected through a network 500 to communicate with each other.

The scope of the vision recognition based cooker control device 100 according to an exemplary embodiment of the present disclosure includes various types of equipment 101 and artificial intelligence assistant speakers 102 having a photographing function. Here, the photographing function may be implemented by an independent photographing device, for example, a camera installed in a kitchen counter.

The artificial intelligence assistant speaker 102 is a device serving as a gateway in home automation and controls various home appliances using voice recognition.

The cooker 300 is a sort of embedded system and receives a cooking instruction from the cooker control device 100 through a wireless communication function and cooks with the cooking ingredients. The scope of the cooker 300 may include appliances such as an electric oven, a microwave, or a cooktop.

The server 200 serves to provide various services related to an artificial intelligence model to the cooker control device 100 with regard an artificial intelligence model which will be described in an exemplary embodiment of the present disclosure. Detailed description of the artificial intelligence model will be provided below. Further, the server 400 serves to provide various services related to vision recognition required to recognize the cooking ingredients.

The network 500 may be an any appropriate communication network including wired and wireless networks, such as a local area network (LAN), a wide area network (WAN), the Internet, the Intranet, and the extranet and a mobile network such as cellular, 3G, LTE, 5G, a Wi-Fi network, an AD hoc network, and a combination thereof.

The network 500 may include connection of network elements such as a hub, a bridge, a router, a switch, and a gateway. The network 500 may include one or more connected networks including a public network such as the Internet and a private network such as a secure corporate private network, for example, multiple network environments. Access to the network 500 may be provided by one or more wired or wireless access networks.

The vision recognition based cooker control device 100 may transmit and receive data with a server 200 which is a learning device, through a 5G network. Specifically, the equipment 101 and the artificial intelligence assistant speaker 102 may perform data communication with the learning device 200 using at least one service of enhanced mobile broadband (eMBB), ultra-reliable and low latency communications (URLLC), and massive machine-type communications (mMTC) through the 5G network.

The enhanced mobile broadband (eMBB) which is a mobile broadband service provides multimedia contents, wireless data access, and so forth. Further, the eMBB may also provide enhanced mobile services such as a hot spot and a broadband coverage to cover the mobile traffic which is explosively increased. A large quantity of traffics may be accommodated in a region with less user mobility and higher density through the hot spot. Further, broad and stable wireless environment and the user mobility may be ensured by the broadband coverage.

The ultra-reliable and low latency communication (URLLC) service defines much stricter requirement than that of the existing LTE in terms of reliability of data transmission/reception and transmission delay and a 5G service for industrial process automation, telemedicine, telesurgery, transportation, safety correspond thereto.

The massive machine-type communication (mMTC) is a service which is insensitive to the transmission delay which requires transmission of a comparatively small amount of data. Much larger number of terminals than normal portable phones, such as sensors may be simultaneously connected to a wireless access network by the mMTC. In this case, the cost of the communication module of the terminal needs to be low and improved power efficiency and power reduction technique are necessary to allow the terminal to operate for several years without replacing or recharging the battery.

During a vision recognition based cooker control process according to an exemplary embodiment of the present disclosure, artificial intelligence (AI) may be used to recognize the cooking ingredient and modify a given recipe in accordance with a taste of the user.

Artificial intelligence (AI) is an area of computer engineering science and information technology that studies methods to make computers mimic intelligent human behaviors such as reasoning, learning, and self-improving.

In addition, artificial intelligence does not exist on its own, but is rather directly or indirectly related to a number of other fields in computer science. In recent years, there have been numerous attempts to introduce an element of AI into various fields of information technology to solve problems in the respective fields.

Machine learning is an area of artificial intelligence that includes the field of study that gives computers the capability to learn without being explicitly programmed.

More specifically, machine learning is a technology that investigates and builds systems, and algorithms for such systems, which are capable of learning, making predictions, and enhancing their own performance on the basis of experiential data. Machine learning algorithms, rather than only executing rigidly set static program commands, may be used to take an approach that builds models for deriving predictions and decisions from inputted data.

Numerous machine learning algorithms have been developed for data classification in machine learning. Representative examples of such machine learning algorithms for data classification include a decision tree, a Bayesian network, a support vector machine (SVM), an artificial neural network (ANN), and so forth.

Decision tree refers to an analysis method that uses a tree-like graph or model of decision rules to perform classification and prediction.

Bayesian network may include a model that represents the probabilistic relationship (conditional independence) among a set of variables. Bayesian network may be appropriate for data mining via unsupervised learning.

SVM may include a supervised learning model for pattern detection and data analysis, heavily used in classification and regression analysis.

ANN is a data processing system modelled after the mechanism of biological neurons and interneuron connections, in which a number of neurons, referred to as nodes or processing elements, are interconnected in layers.

ANNs are models used in machine learning and may include statistical learning algorithms conceived from biological neural networks (particularly of the brain in the central nervous system of an animal) in machine learning and cognitive science.

ANNs may refer generally to models that have artificial neurons (nodes) forming a network through synaptic interconnections, and acquires problem-solving capability as the strengths of synaptic interconnections are adjusted throughout training.

The terms 'artificial neural network' and 'neural network' may be used interchangeably herein.

An ANN may include a number of layers, each including a number of neurons. Furthermore, the ANN may include synapses that connect the neurons to one another.

An ANN may be defined by the following three factors: (1) a connection pattern between neurons on different layers; (2) a learning process that updates synaptic weights; and (3) an activation function generating an output value from a weighted sum of inputs received from a previous layer.

ANNs include, but are not limited to, network models such as a deep neural network (DNN), a recurrent neural network (RNN), a bidirectional recurrent deep neural network (BRDNN), a multilayer perception (MLP), and a convolutional neural network (CNN).

An ANN may be classified as a single-layer neural network or a multi-layer neural network, based on the number of layers therein.

In general, a single-layer neural network may include an input layer and an output layer.

Further, in general, a multi-layer neural network may include an input layer, one or more hidden layers, and an output layer.

The input layer receives data from an external source, and the number of neurons in the input layer is identical to the number of input variables. The hidden layer is located between the input layer and the output layer, and receives signals from the input layer, extracts features, and feeds the extracted features to the output layer. The output layer receives a signal from the hidden layer and outputs an output value based on the received signal. Input signals between the neurons are summed together after being multiplied by corresponding connection strengths (synaptic weights), and if this sum exceeds a threshold value of a corresponding neuron, the neuron can be activated and output an output value obtained through an activation function.

In the meantime, a deep neural network with a plurality of hidden layers between the input layer and the output layer may be the most representative type of artificial neural network which enables deep learning, which is one machine learning technique.

An ANN can be trained using training data. Here, the training may refer to the process of determining parameters of the artificial neural network by using the training data, to perform tasks such as classification, regression analysis, and clustering of inputted data. Such parameters of the artificial neural network may include synaptic weights and biases applied to neurons.

An artificial neural network trained using training data can classify or cluster inputted data according to a pattern within the inputted data.

Throughout the present specification, an artificial neural network trained using training data may be referred to as a trained model.

Hereinbelow, learning paradigms of an artificial neural network will be described in detail.

Learning paradigms, in which an artificial neural network operates, may be classified into supervised learning, unsupervised learning, semi-supervised learning, and reinforcement learning.

Supervised learning is a machine learning method that derives a single function from the training data.

Among the functions that may be thus derived, a function that outputs a continuous range of values may be referred to as a regressor, and a function that predicts and outputs the class of an input vector may be referred to as a classifier.

In supervised learning, an artificial neural network can be trained with training data that has been given a label.

Here, the label may refer to a target answer (or a result value) to be guessed by the artificial neural network when the training data is inputted to the artificial neural network.

Throughout the present specification, the target answer (or a result value) to be guessed by the artificial neural network when the training data is inputted may be referred to as a label or labeling data.

Further, throughout the present specification, assigning one or more labels to training data in order to train an artificial neural network may be referred to as labeling the training data with labeling data.

In this case, training data and labels corresponding to the training data together may form a single training set, and as such, they may be inputted to an artificial neural network as a training set.

In the meantime, the training data may exhibit a number of features, and the training data being labeled with the labels may be interpreted as the features exhibited by the training data being labeled with the labels. In this case, the training data may represent a feature of an input object as a vector.

Using training data and labeling data together, the artificial neural network may derive a correlation function between the training data and the labeling data. Then, through evaluation of the function derived from the artificial neural network, a parameter of the artificial neural network may be determined (optimized).

Unsupervised learning is a machine learning method that learns from training data that has not been given a label.

More specifically, unsupervised learning may be a training scheme that trains an artificial neural network to discover a pattern within given training data and perform classification by using the discovered pattern, rather than by using a correlation between given training data and labels corresponding to the given training data.

Examples of unsupervised learning include clustering and independent component analysis.

Examples of artificial neural networks using unsupervised learning include, but are not limited to, a generative adversarial network (GAN) and an autoencoder (AE).

GAN is a machine learning method in which two different artificial intelligences, a generator and a discriminator, improve performance through competing with each other.

The generator may be a model generating new data that generates new data based on true data.

Further, the discriminator may be a model recognizing patterns in data that determines whether inputted data is from the true data or from the new data generated by the generator.

Furthermore, the generator may receive and learn from data that has failed to fool the discriminator, while the discriminator may receive and learn from data that has succeeded in fooling the generator. Accordingly, the generator may evolve so as to fool the discriminator as effectively as possible, while the discriminator evolves so as to distinguish, as effectively as possible, between the true data and the data generated by the generator.

An auto-encoder (AE) is a neural network which aims to reconstruct its input as output.

More specifically, AE may include an input layer, at least one hidden layer, and an output layer.

In this case, since the number of nodes in the hidden layer is smaller than the number of nodes in the input layer, the dimensionality of data is reduced, thus leading to data compression or encoding.

Furthermore, the data outputted from the hidden layer may be inputted to the output layer. Given that the number of nodes in the output layer is greater than the number of nodes in the hidden layer, the dimensionality of the data increases, thus leading to data decompression or decoding.

In the meantime, in the AE, the inputted data is represented as hidden layer data as interneuron connection strengths are adjusted through training. The fact that when representing information, the hidden layer is able to reconstruct the inputted data as output by using fewer neurons than the input layer may indicate that the hidden layer has discovered a hidden pattern in the inputted data and is using the discovered hidden pattern to represent the information.

Semi-supervised learning is machine learning method that makes use of both labeled training data and unlabeled training data.

One semi-supervised learning technique involves reasoning the label of unlabeled training data, and then using this reasoned label for learning. This technique may be used advantageously when the cost associated with the labeling process is high.

Reinforcement learning may be based on a theory that given the condition under which a reinforcement learning agent can determine what action to choose at each time instance, the agent can find an optimal path to a solution solely based on experience without reference to data.

Reinforcement learning may be performed mainly through a Markov decision process (MDP).

Markov decision process consists of four stages: first, an agent is given a condition containing information required for performing a next action; second, how the agent behaves in the condition is defined; third, which actions the agent should choose to get rewards and which actions to choose to get penalties are defined; and fourth, the agent iterates until future reward is maximized, thereby deriving an optimal policy.

An artificial neural network is characterized by features of its model, the features including an activation function, a loss function or cost function, a learning algorithm, an optimization algorithm, and so forth. Also, the hyperparameters are set before learning, and model parameters can be set through learning to specify the architecture of the artificial neural network.

For instance, the structure of an artificial neural network may be determined by a number of factors, including the number of hidden layers, the number of hidden nodes included in each hidden layer, input feature vectors, target feature vectors, and so forth.

Hyperparameters may include various parameters which need to be initially set for learning, much like the initial values of model parameters. Also, the model parameters may include various parameters sought to be determined through learning.

For instance, the hyperparameters may include initial values of weights and biases between nodes, mini-batch size, iteration number, learning rate, and so forth. Furthermore, the model parameters may include a weight between nodes, a bias between nodes, and so forth.

Loss function may be used as an index (reference) in determining an optimal model parameter during the learning process of an artificial neural network. Learning in the artificial neural network involves a process of adjusting model parameters so as to reduce the loss function, and the purpose of learning may be to determine the model parameters that minimize the loss function.

Loss functions typically use means squared error (MSE) or cross entropy error (CEE), but the present disclosure is not limited thereto.

Cross-entropy error may be used when a true label is one-hot encoded. One-hot encoding may include an encoding method in which among given neurons, only those corresponding to a target answer are given 1 as a true label value, while those neurons that do not correspond to the target answer are given 0 as a true label value.

In machine learning or deep learning, learning optimization algorithms may be deployed to minimize a cost function, and examples of such learning optimization algorithms include gradient descent (GD), stochastic gradient descent (SGD), momentum, Nesterov accelerate gradient (NAG), Adagrad, AdaDelta, RMSProp, Adam, and Nadam.

GD includes a method that adjusts model parameters in a direction that decreases the output of a cost function by using a current slope of the cost function.

The direction in which the model parameters are to be adjusted may be referred to as a step direction, and a size by which the model parameters are to be adjusted may be referred to as a step size.

Here, the step size may mean a learning rate.

GD obtains a slope of the cost function through use of partial differential equations, using each of model parameters, and updates the model parameters by adjusting the model parameters by a learning rate in the direction of the slope.

SGD may include a method that separates the training dataset into mini batches, and by performing gradient descent for each of these mini batches, increases the frequency of gradient descent.

Adagrad, AdaDelta and RMSProp may include methods that increase optimization accuracy in SGD by adjusting the step size, and may also include methods that increase optimization accuracy in SGD by adjusting the momentum and step direction. Adam may include a method that combines momentum and RMSProp and increases optimization accuracy in SGD by adjusting the step size and step direction. Nadam may include a method that combines NAG and RMSProp and increases optimization accuracy by adjusting the step size and step direction.

Learning rate and accuracy of an artificial neural network rely not only on the structure and learning optimization algorithms of the artificial neural network but also on the hyperparameters thereof. Therefore, in order to obtain a good learning model, it is important to choose a proper structure and learning algorithms for the artificial neural network, but also to choose proper hyperparameters.

In general, the artificial neural network is first trained by experimentally setting hyperparameters to various values, and based on the results of training, the hyperparameters can be set to optimal values that provide a stable learning rate and accuracy.

The equipment 101 according to the exemplary embodiment of the present disclosure may use a program related to various artificial intelligence algorithms stored in a local area and the server 200 during processes of generating, training, evaluating, completing various artificial intelligence models, and updating the artificial intelligence models using personal data of the user, with regard to an artificial intelligence model required to recognize a vision and perform a function.

Hereinafter, the exemplary embodiment of the present disclosure will be described with respect to the equipment 101 which is represents the vision recognition based cooker control device 100 according to above-described several exemplary embodiments of the present disclosure. Further, unless other specific assumption or conditions are provided, the description of the equipment 101 may be applied to another exemplary embodiment as it is.

The server 200 serves to collect learning data required to train various artificial intelligence models and train the artificial intelligence model using the collected data. When the various artificial intelligence models trained by the server 200 are completed by the evaluation, the equipment 101 uses the various artificial intelligence models or the artificial intelligence models serve as principal agents to perform human body recognition, face recognition, and object recognition.

FIG. 2 is an exemplary diagram of a network environment connected to a vision recognition based cooker control device according to an exemplary embodiment of the present disclosure.

Referring to FIG. 2, the equipment 101 may be implemented by fixed devices and mobile devices such as a portable phone, a projector, a smart phone, a laptop computer, a digital broadcasting terminal, a personal digital assistant (PDA), a portable multimedia player (PMP), a navigation, a slate PC, a tablet PC, an ultrabook, a wearable device (for example, a smartwatch, a smart glass, and a head mounted display (HMD)), a set-top box (STB), a DMB receiver, a radio, a washing machine, a refrigerator, a desktop computer, and a digital signage.

That is, the equipment 101 may be implemented as various home appliances used at home and also applied to a fixed or mobile robot.

The equipment 101 may perform a function of a voice agent. The voice agent may be a program which recognizes a voice of the user and outputs a response appropriate for the recognized voice of the user as a voice.

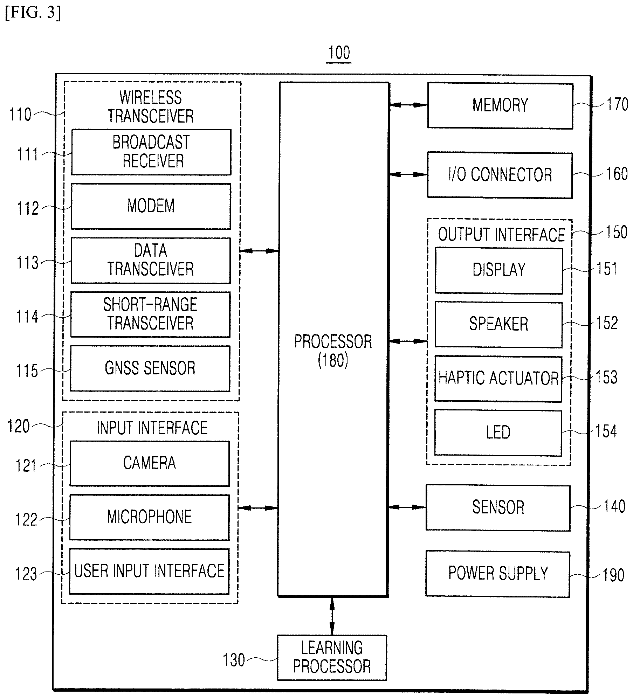

FIG. 3 is a block diagram of a vision recognition based cooker control device according to an exemplary embodiment of the present disclosure.

Referring to FIG. 3, the equipment 101 includes a wireless transceiver 110, an input interface 120, a learning processor 130, a sensor 140, an output interface 150, an I/O connector 160, a memory 170, a processor 180, and a power supply 190.

A learning model (a trained model) may be loaded in the equipment 101.

In the meantime, the learning model may be implemented by hardware, software, or a combination of hardware and software. When a part or all of the learning model is implemented by software, one or more commands which configure the learning model may be stored in the memory 170.

The wireless transceiver 110 may include at least one of a broadcast receiver 111, a modem 112, a data transceiver 113, a short-range transceiver 114, and a GNSS sensor 115.

The broadcast receiver 111 receives a broadcasting signal and/or broadcasting related information from an external broadcasting management server through a broadcasting channel.

The modem 112 may transmit/receive a wireless signal to/from at least one of a base station, an external terminal, and a server on a mobile communication network established according to the technical standards or communication methods for mobile communication (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A)).

The data transceiver 113 refers to a module for wireless internet access and may be built in or external to the equipment 101. The data transceiver 113 may be configured to transmit/receive a wireless signal in a communication network according to wireless internet technologies.

The wireless internet technologies may include Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A).

The short-range transceiver 114 may support Short-range communication by using at least one of Bluetooth™, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies.

The GNSS sensor 115 is a module for obtaining a position (or a current position) of the equipment 101 and a representative example thereof is a global positioning system (GPS) module or a wireless-fidelity (Wi-Fi) module. For example, when the equipment 101 utilizes the GPS module, the equipment 101 may obtain the position of the equipment 101 using a signal transmitted from the GPS satellite.

The input interface 120 may include a camera 121 which inputs an image signal, a microphone 122 which receives an audio signal, and a user input interface 123 which receives information from the user.

Voice data or image data collected by the input interface 120 is analyzed to be processed as a control command of the user.

The input interface 120 may obtain training data for training a model and input data used to obtain an output using the trained model.

The input interface 120 may obtain input data which is not processed, and, in this case, the processor 180 or the learning processor 130 pre-processes the obtained data to generate training data to be input to the model learning or pre-processed input data.

In this case, the pre-processing on the input data may refer to extracting of an input feature from the input data.

The input interface 120 is provided to input image information (or signal), audio information (or signal), data, or information input from the user and in order to input the image information, the equipment 101 may include one or a plurality of cameras 121.

The camera 121 processes an image frame such as a still image or a moving image obtained by an image sensor in a video call mode or a photographing mode. The processed image frame may be displayed on the display 151 or stored in the memory 170.

The microphone 122 processes an external sound signal as electrical voice data. The processed voice data may be utilized in various forms in accordance with a function which is being performed by the equipment 101 (or an application program which is being executed). In the meantime, in the microphone 122, various noise removal algorithms which remove a noise generated during the process of receiving the external sound signal may be implemented.

The user input interface 123 receives information from the user and when the information is input through the user input interface 123, the processor 180 may control the operation of the equipment 101 so as to correspond to the input information.

The user input interface 123 may include a mechanical input interface (or a mechanical key, for example, a button located on a front, rear, or side surface of the equipment 101, a dome switch, a jog wheel, or a jog switch) and a touch type input interface. For example, the touch type input interface may be formed by a virtual key, a soft key, or a visual key which is disposed on the touch screen through a software process or a touch key which is disposed on a portion other than the touch screen.

The learning processor 130 learns the model configured by an artificial neural network using the training data.

Specifically, the learning processor 130 allows the artificial neural network to repeatedly learn using various learning techniques described above to determine optimized model parameters of the artificial neural network.

In this specification, the artificial neural network which is trained using training data to determine parameters may be referred to as a learning model or a trained model.

In this case, the learning model may be used to deduce a result for the new input data, rather than the training data.

The learning processor 130 may be configured to receive, classify, store, and output information to be used for data mining, data analysis, intelligent decision making, and machine learning algorithm and techniques.

The learning processor 130 may include one or more memory units configured to store data which is received, detected, sensed, generated, previously defined, or output by another component, device, the equipment 101, or a device which communicates with the equipment 101.

The learning processor 130 may include a memory which is combined with or implemented in the equipment 101. In some exemplary embodiments, the learning processor 130 may be implemented using the memory 170.

Selectively or additionally, the learning processor 130 may be implemented using a memory related to the equipment 101, such as an external memory which is directly coupled to the equipment 101 or a memory maintained in the server 200 which communicates with the equipment 101.

According to another exemplary embodiment, the learning processor 130 may be implemented using a memory maintained in a cloud computing environment or other remote memory locations accessible by the equipment 101 via a communication method such as a network.

The learning processor 130 may be configured to store data in one or more databases to identify, index, categorize, manipulate, store, search, and output data in order to be used for supervised or non-supervised learning, data mining, predictive analysis, or used in the other machine. Here, the database may be implemented using the memory 170, a memory 230 of the learning device 200, a memory maintained in a cloud computing environment or other remote memory locations accessible by the equipment 101 via a communication method such as a network.

Information stored in the learning processor 130 may be used by the processor 180 or one or more controllers of the equipment 101 using an arbitrary one of different types of data analysis algorithms and machine learning algorithms.

Examples of algorithm include k-nearest neighbor systems, fuzzy logic (for example, likelihood theory), neural networks, Boltzmann machines, vector quantization, pulse neural networks, support vector machines, maximum margin classifiers, hill climbing, induction logic system, Bayesian network, Pertinet (for example, a finite state machine, a millimachine, a Moore finite state machine), a classifier tree (for example, a perceptron tree, a support vector tree, a Markov tree, a decision tree forest, an arbitrary forest), decoding models and systems, artificial fusion, sensor fusion, image fusion, reinforcement learning, augmented reality, pattern recognition, an automated plan, and so forth.

The processor 180 may determine or predict at least one executable operation of the equipment 101 based on information which is determined or generated using the data analysis and the machine learning algorithm. To this end, the processor 180 may request, search, receive, or utilize the data of the learning processor 130 and control the equipment 101 to execute a predicted operation or a desired operation among the at least one executable operation.

The processor 180 may perform various functions which implement intelligent emulation (that is, a knowledge based system, an inference system, and a knowledge acquisition system). This may be applied to various types of systems (for example, a fuzzy logic system) including an adaptive system, a machine learning system, and an artificial neural network.

The processor 180 may include sub modules which enable operations involving voice and natural language voice processing, such as an I/O processing module, an environmental condition module, a speech to text (STT) processing module, a natural language processing module, a workflow processing module, and a service processing module.

The sub modules may have an access to one or more systems or data and a model, or a subset or a super set thoseof in the equipment 101. Further, each of the sub modules may provide various functions including a glossarial index, user data, a workflow model, a service model, and an automatic speech recognition (ASR) system.

According to another exemplary embodiment, another aspect of the processor 180 or the equipment 101 may be implemented by the above-described sub module, a system, data, and a model.

In some exemplary embodiments, based on the data of the learning processor 130, the processor 180 may be configured to detect and sense requirements based on contextual conditions expressed by user input or natural language input or user's intention.

The processor 180 may actively derive and obtain information required to completely determine the requirement based on the contextual conditions or the user's intention. For example, the processor 180 may actively derive information required to determine the requirements, by analyzing past data including historical input and output, pattern matching, unambiguous words, and input intention.

The processor 180 may determine a task flow to execute a function responsive to the requirements based on the contextual condition or the user's intention.

The processor 180 may be configured to collect, sense, extract, detect and/or receive a signal or data which is used for data analysis and a machine learning task through one or more sensing components in the equipment 101, to collect information for processing and storing in the learning processor 130.

The information collection may include sensing information by a sensor, extracting of information stored in the memory 170, or receiving information from other equipment, an entity, or an external storage device through a transceiver.

The processor 180 collects usage history information from the equipment 101 and stores the information in the memory 170.

The processor 180 may determine best matching to execute a specific function using stored usage history information and predictive modeling.

The processor 180 may receive or sense surrounding environment information or other information through the sensor 140.

The processor 180 may receive a broadcasting signal and/or broadcasting related information, a wireless signal, or wireless data through the wireless transceiver 110.

The processor 180 may receive image information (or a corresponding signal), audio information (or a corresponding signal), data, or user input information from the input interface 120.

The processor 180 may collect the information in real time, process or classify the information (for example, a knowledge graph, a command policy, a personalized database, or a conversation engine) and store the processed information in the memory 170 or the learning processor 130.

When the operation of the equipment 101 is determined based on data analysis and a machine learning algorithm and technology, the processor 180 may control the components of the equipment 101 to execute the determined operation. Further, the processor 180 may control the equipment in accordance with the control command to perform the determined operation.

When a specific operation is performed, the processor 180 analyzes history information indicating execution of the specific operation through the data analysis and the machine learning algorithm and technology and updates the information which is previously learned based on the analyzed information.

Therefore, the processor 180 may improve precision of a future performance of the data analysis and the machine learning algorithm and technology based on the updated information, together with the learning processor 130.

The sensor 140 may include one or more sensors which sense at least one of information in the equipment 101, surrounding environment information around the equipment 101, and user information.

For example, the sensor 140 may include at least one of a proximity sensor, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, a camera 121), a microphone 122, a battery gauge, an environment sensor (for example, a barometer, a hygrometer, a thermometer, a radiation sensor, a thermal sensor, or a gas sensor), and a chemical sensor (for example, an electronic nose, a healthcare sensor, or a biometric sensor). In the meantime, according to the exemplary embodiment, the equipment 101 may combine and utilize information sensed by at least two sensors from the above-mentioned sensors.

The output interface 150 generates outputs related to vision, auditory, or tactile and may include at least one of a display 151, a speaker 152, a haptic actuator 153, and an LED 154.

The display 151 displays (outputs) information processed in the equipment 101. For example, the display 151 may display execution screen information of an application program driven in the equipment 101 and user interface (UI) and graphic user interface (GUI) information in accordance with the execution screen information.

The display 151 forms a mutual layered structure with a touch sensor or is formed integrally to be implemented as a touch screen. The touch screen may simultaneously serve as a user input interface 123 which provides an input interface between the equipment 101 and the user and provide an output interface between the equipment 101 and the user.

The speaker 152 may output audio data received from the wireless transceiver 110 or stored in the memory 170 in a call signal reception mode, a phone-call mode, a recording mode, a voice recognition mode, or a broadcasting reception mode.

The speaker 152 may include at least one of a receiver, a speaker, and a buzzer.

The haptic actuator 153 may generate various tactile effects that the user may feel. A representative example of the tactile effect generated by the haptic actuator 153 may be vibration.

The LED 154 outputs a signal for notifying occurrence of an event using light of a light source of the equipment 101. Examples of the event generated in the equipment 101 may be message reception, call signal reception, missed call, alarm, schedule notification, email reception, and information reception through an application.

The I/O connector 160 serves as a passage with various types of external devices which are connected to the equipment 101. The I/O connector 160 may include at least one of a wired/wireless headset port, an external charger port, a wired/wireless data port, a memory card port, a port which connects a device equipped with an identification module, an audio input/output (I/O) port, a video input/output (I/O) port, and an earphone port. The equipment 101 may perform appropriate control related to the connected external device in accordance with the connection of the external device to the I/O connector 160.

In the meantime, the identification module is a chip in which various information for authenticating a usage right of the equipment 101 is stored and includes a user identification module (UIM), a subscriber identify module (SIM), and a universal subscriber identity module (USIM). The device with an identification module (hereinafter, "identification device") may be manufactured as a smart card. Therefore, the identification device may be connected to the equipment 101 through the I/O connector 160.

The memory 170 stores data which supports various functions of the equipment 101.

The memory 170 may store various application programs (or applications) driven in the equipment 101, data for the operation of the equipment 101, commands, and data (for example, at least one algorithm information for machine learning) for the operation of the learning processor 130.

The memory 170 may store the model which is learned in the learning processor 130 or the learning device 200.

If necessary, the memory 170 may store the trained model by dividing the model into a plurality of versions depending on a training timing or a training progress.

In this case, the memory 170 may store input data obtained from the input interface 120, learning data (or training data) used for model learning, a learning history of the model, and so forth.

In this case, the input data stored in the memory 170 may be not only data which is processed to be suitable for the model learning but also input data itself which is not processed.

In addition to the operation related to the application program, the processor 180 may generally control an overall operation of the equipment 101. The processor 180 may process a signal, data, or information which is input or output through the above-described components or drives the application programs stored in the memory 170 to provide or process appropriate information or functions to the user.

Further, in order to drive the application program stored in the memory 170, the processor 180 may control at least some of components described with reference to FIG. 1. Moreover, the processor 180 may combine and operate at least two of components included in the equipment 101 to drive the application program.

In the meantime, as described above, the processor 180 may control an operation related to the application program and an overall operation of the equipment 101. For example, when the state of the equipment 101 satisfies a predetermined condition, the processor 180 may execute or release a locking state which restricts an input of a control command of a user for the applications.

The power supply 190 is applied with external power or internal power to supply the power to the components included in the equipment 101 under the control of the processor 180. The power supply 190 includes a battery and the battery may be an embedded battery or a replaceable battery.

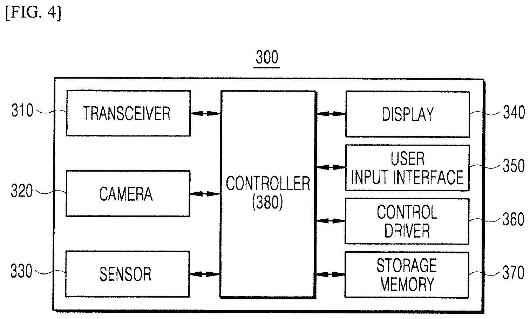

FIG. 4 is a block diagram of a cooker according to an exemplary embodiment of the present disclosure.

Referring to FIG. 4, the cooker 300 may include a transceiver 310, a camera 320, a sensor 330, a display 340, a user input interface 350, a control driver 360, a storage memory 370, and a controller 380.

The transceiver 310 receives a cooking instruction from the cooker control device 100 or the server 200. The cooker 300 may be communicably connected to the cooker control device 100 using the transceiver 310, for example, a short-range transceiver such as Bluetooth. Further, the cooker 300 may be connected to the server 400 via the Internet using a wireless LAN, for example, a Wi-Fi module.

The camera 320 is located at the outside of the cooker 300 to photograph cooking ingredients to obtain an input image for vision recognition.

The sensor 330 measures an internal temperature of the cooker 300, etc. during the cooking process.

The display 340 displays the cooking process performed by the cooker 300.

The user input interface 350 sets various parameters required for operating the cooker 300 and receives a cooking code corresponding to the recipe. For example, when the vision recognition based cooker control device 100 displays a cooking code corresponding to the recipe, the user may directly input the corresponding cooking code using the user input interface 350 of the cooker 300.

The storage memory 370 stores the recipe received from the server 400 and stores a program corresponding to each recipe.

The controller 380 controls components of the cooker 300 and controls an operation of the cooker 300 using the components.

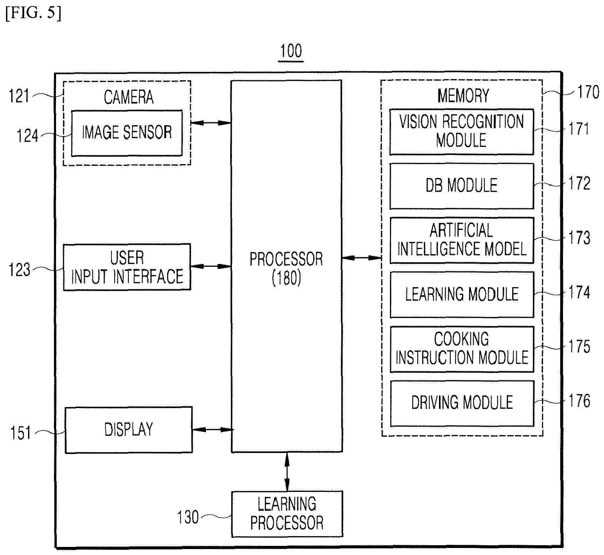

FIG. 5 is a block diagram illustrating components of a memory in which some components of FIG. 3 are omitted.

Referring to FIG. 5, the equipment 101 is briefly illustrated together with components of the memory 170. In the memory, various computer program modules may be loaded. The scope of the computer program loaded in the memory 170 may include a vision recognition module 171, a DB module 172, an artificial intelligence model 173, a learning module 174, a cooking instruction module 175, and a driving module 176 as application programs other than the operating system and a system program which manages hardware. Here, some of application programs may be implemented as hardware including an integrated circuit.

The processor 180 is set to control the modules 171 to 176 stored in the memory 170 and the application programs of the modules perform the corresponding function in accordance with the setting.

Each module may be set to include a command set regarding each function which configures a vision recognition based cooker control method according to an exemplary embodiment of the present disclosure. Various logic circuits included in the processor 180 read the command set of various modules loaded in the memory 170 and the functions of the modules may be performed by the cooker control device 100 during the executing process.

The vision recognition module 171 explores features of the cooking ingredient or a packaging design in accordance with a kind of a cooking ingredient from the input image and recognizes the cooking ingredient as an exploring result. Various vision recognition algorithms may be applied to detect the cooking ingredients. Examples of the algorithms are as follows:

There are a plurality of computer vision methods which compares an input image and a reference image stored in a database, based on an exterior feature of the cooking ingredient and determines whether the input image matches the reference image.

According to the vision recognition based cooker control method according to the exemplary embodiment of the present disclosure, the vision recognition module 171 may use various pre-processing methods for vision recognition, for example, conversion of an RGB image into a gray image and Morph Gradient algorithm may be used to extract a contour image and an adaptive threshold algorithm may be used to remove noises.

The processor 180 may detect objects and recognizes characters (OCR) based on a packaging design of the cooking ingredient and recognize an ID of the cooking ingredient using the recognized object and characters. A contour extracting method may be used to recognize objects and characters. Further, the Morph close algorithm and a long line remove algorithm may be used as a method for processing a contour.

The cooker control device 100 may recognize the cooking ingredient using an artificial intelligence model 173, for example, an artificial neural network. An image including a feature of a cooking ingredient which is learned using a sliding window in a monochrome still image is searched by the artificial neural network. Features of two or more cooking ingredients may be extracted. The learning device 200 may allow the artificial neural network to learn as training for classifying images and recognizing objects and characters. Image data including only characters and image data including both characters and objects may be prepared as learning data.

There is a method of recognizing a face using a fuzzy and artificial neural network. As an input of the artificial neural network circuit, a fuzzy membership function is used instead of a brightness of a pixel. A performance of this algorithm is improved as compared with the method only using the artificial neural network, but there is a disadvantage that the processing speed is slow.

According to an exemplary embodiment of the present disclosure, the DB module 172 detects a recipe regarding a recognized cooking ingredient. The database regarding the recipe may be provided by the server 400 and the cooker control device 100 may store recipe information received from the server 400.

The DB module 172 may upgrade a database using a cooking history by the cooker control device 100 and collected log data.

Here, the equipment 101 may include the artificial intelligence model 173. The artificial intelligence model 173 may be implemented by an artificial neural network which is trained to recognize the cooking ingredients through the machine learning. The trained artificial neural network may be trained to determine a category of a cooking ingredient in the input image among categories including a convenience food, a meal kit, and a raw food material, depending on a processed degree. The training corresponds to image classification by supervised learning.

For example, the artificial neural network may recognize a product name represented on a packaging, a photograph or an illustration of the product and classify the recognized object as a convenience food. Further, the artificial neural network may classify a cooking ingredient which is represented only by a product name on a packaging without having a photograph or illustration of the product as a meal kit. Further, even though some packaged objects are recognized, the artificial neural network may recognize other objects without packaging as raw natural ingredients which are not processed to classify the objects as raw food materials.

As an exemplary embodiment, the artificial intelligence model 173 is subjected to a learning process and an evaluation process in the server 200 which is a learning device 200 to be completed and then stored in the memory 170 of the cooker control device 100.

Further, the stored artificial intelligence model 173 may be trained as a personalized artificial intelligence model by a secondary learning process by the learning module 174 using user log data collected by the cooker control device 100. Therefore, a type of user's favorite cooking ingredient and main cooking patterns used therefor may be recognized by the secondary learning which uses the feature of the image collected by the personal equipment 101.

The cooking instruction module 174 generates a cooking instruction in accordance with the recipe detected from the DB and the cooking pattern recognized by the artificial intelligence. When the cooking instruction corresponding to the recognized cooking ingredient is stored in the cooker 300, the stored cooking instruction may be used. However, when there is no stored cooking instruction or the stored cooking instruction needs to be modified according to the cooking pattern, the cooking instruction module 174 may generate a new cooking instruction by combining one or more operation instructions. The cooker 300 is controlled to cook the corresponding cooking ingredient by the cooking instruction programmed as described above.

The operation module 176 drives various cookers, for example, the electric oven or the microwave, in accordance with the cooking instruction.

The server 200 may provide learning data required for training the artificial intelligence model which recognizes the cooking ingredient as the learning result and a computer program related to various artificial intelligence algorithms, for example, API or data workflows, etc., to the equipment 101.

Further, the server 200 may collect learning data required for learning to recognize an object, a character, and a feature of a shape of the ingredient in the form of user log data through the user data 100 and provide an artificial intelligence model which is directly trained using the collected learning data, to the equipment 101.

The learning device 200 is a device or a server which is separately configured at the outside of the equipment 101 and may perform the same function as the learning processor 130 of the equipment 101.

That is, the learning device 200 may be configured to receive, classify, store, and output information to be used for data mining, data analysis, intelligent decision making, and machine learning algorithms. Here, the machine learning algorithm may include a deep learning algorithm.

The learning device 200 may communicate with at least one equipment 101 and derive a result by analyzing or learning the data on behalf of the equipment 101. Here, the meaning of "on behalf of the other device" may be distribution of a computing power by means of distributed processing.

The learning device 200 of the artificial neural network is various devices for learning an artificial neural network and normally, refers to a server, and also referred to as a learning device or a learning server.

Specifically, the learning device 200 may be implemented not only by a single server, but also by a plurality of server sets, a cloud server, or a combination thereof.

That is, the learning device 200 is configured as a plurality of learning devices to configure a learning device set (or a cloud server) and at least one learning device 200 included in the learning device set may derive a result by analyzing or learning the data through the distributed processing.

The learning device 200 may transmit a model trained by the machine learning or the deep learning to the equipment 101 periodically or upon the request.

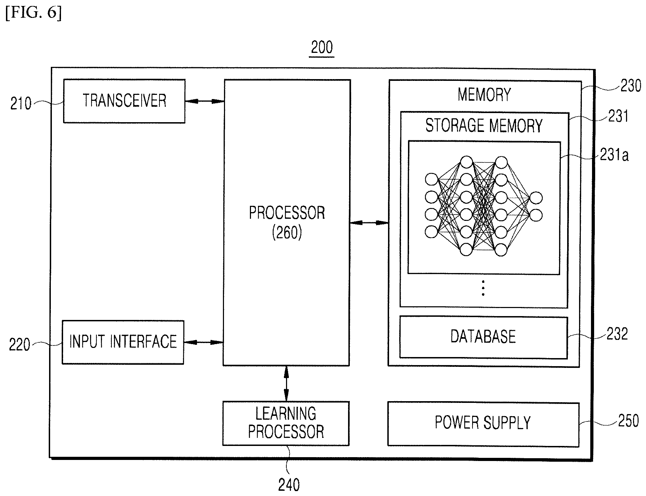

FIG. 6 is a block diagram of a server corresponding to a learning device of an artificial intelligence model according to an exemplary embodiment of the present disclosure.

Referring to FIG. 6, the learning device 200 may include a transceiver 210, an input interface 220, a memory 230, a learning processor 240, a power supply 250, a processor 260, and so forth.

The transceiver 210 may correspond to a configuration including the wireless transceiver 110 and the I/O connector 260 of FIG. 3. That is, the communication unit may transmit and receive data with the other device through wired/wireless communication or an interface.

The input interface 220 is a configuration corresponding to the input interface 120 of FIG. 3 and may receive the data through the transceiver 210 to obtain data.

The input interface 220 may obtain input data for acquiring an output using training data for model learning and a trained model.

The input interface 220 may obtain input data which is not processed, and, in this case, the processor 260 may pre-process the obtained data to generate training data to be input to the model learning or pre-processed input data.

In this case, the pre-processing on the input data performed by the input interface 220 may refer to extracting of an input feature from the input data.

The memory 230 is a configuration corresponding to the memory 170 of FIG. 3.

The memory 230 may include a storage memory 231, a database 232, and so forth.

The storage memory 231 stores a model (or an artificial neural network 231a) which is under learning or learned through the learning processor 240 and when the model is updated through the learning, stores the updated model.

If necessary, the storage memory 231 stores the learned model by dividing the model into a plurality of versions depending on a training timing or a training progress.

The artificial neural network 231a illustrated in FIG. 6 is one example of artificial neural networks including a plurality of hidden layers but the artificial neural network of the present disclosure is not limited thereto.

The artificial neural network 231a may be implemented by hardware, software, or a combination of hardware and software. When a part or all of the artificial neural network 231a is implemented by the software, one or more commands which configure the artificial neural network 231a may be stored in the memory 230.

The database 232 stores input data obtained from the input interface 220, learning data (or training data) used to learn a model, a learning history of the model, and so forth.

The input data stored in the database 232 may be not only data which is processed to be suitable for the model learning but also input data itself which is not processed.

The learning processor 240 is a configuration corresponding to the learning processor 130 of FIG. 3.

The learning processor 240 may train (or learn) the artificial neural network 231a using training data or a training set.

The learning processor 240 may immediately obtain data which is obtained by pre-processing input data obtained by the processor 260 through the input interface 220 to learn the artificial neural network 231a or obtain the pre-processed input data stored in the database 232 to learn the artificial neural network 231a.

Specifically, the learning processor 240 may train the artificial neural network 231a repeatedly by using various learning techniques described above to determine optimized model parameters of the artificial neural network 231a.

In this specification, the artificial neural network which is learned using training data to determine parameters may be referred to as a learning model or a trained model.

In this case, the learning model may be loaded in the learning device 200 to deduce the result value or may be transmitted to the other device such as the equipment 101 through the transceiver 210 to be loaded.

Further, when the learning model is updated, the updated learning model may be transmitted to the other device such as the equipment 101 via the transceiver 210 to be loaded.

The power supply 250 is a configuration corresponding to the power supply 190 of FIG. 3. A redundant description for corresponding configurations will be omitted.

In addition, the learning device 200 may evaluate the artificial intelligence model and update the artificial intelligence model for better performance even after the evaluation and provide the updated artificial intelligence model to the equipment 101. Here, the equipment 101 may perform a series of steps performed by the learning device 200 solely in a local area or together with the learning device 200 through the communication with the learning device 200. For example, the equipment 101 may allow the artificial intelligence model to learn a personal pattern of the user through the learning by the user's personal data to update the artificial intelligence model which is downloaded from the learning device 200.

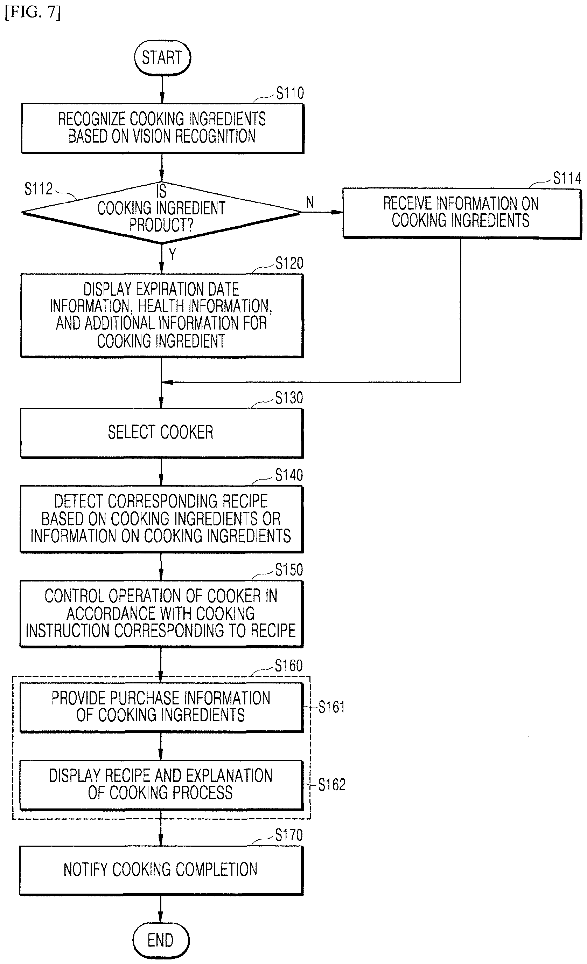

FIG. 7 is a flowchart of a vision recognition based cooker control method according to an exemplary embodiment of the present disclosure.

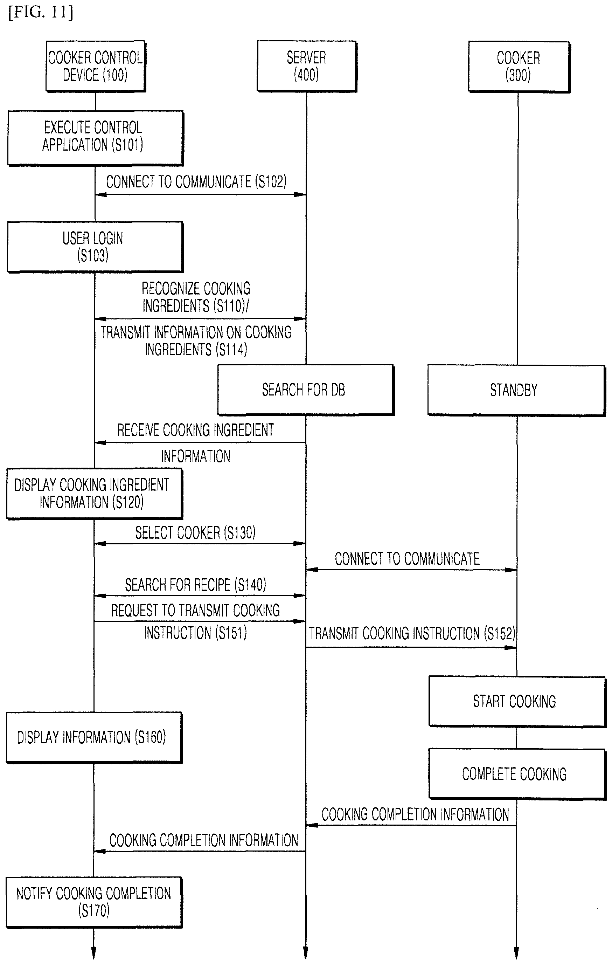

Referring to FIG. 7, a vision recognition based cooker control method S100 according to an exemplary embodiment of the present disclosure may be configured to include steps S110 to S170. Individual steps may be performed by the cooker control device 100 solely or by interworking with the server 200. A related exemplary embodiment will be described with reference to FIGS. 11 to 13.

Here, a major element which performs the individual steps configuring the cooker control method S100 is the cooker control device 100, that is, the equipment 101 or the artificial intelligence speaker 102 and specifically, the processor 180 which executes a computer command for controlling a cooker included in a program stored on the memory 170.

The processor 180 may be implemented as at least one of a CPU called a central processing unit and a GPU called a graphics processing unit. Hereinafter, each of steps will be described at a view point of the cooker control device 100 or the processor 180 which is a major element of executing the vision recognition based cooker control method according to the exemplary embodiment of the present disclosure.

The cooker control device 100 recognizes cooking ingredients based on vision recognition or receives cooking ingredient information in step S110. The step S110 may be configured to include a step of acquiring an image of a cooking ingredient, a step of removing a noise from the obtained image, a step of learning an artificial intelligence model using the image from which the noise is removed as learning data, and a step of recognizing an object, that is, the cooking ingredient, using the artificial intelligence model in which the learning is completed through the evaluation.

The removal of the noise corresponds to a data mining step to increase the learning effect of the artificial intelligence model. As described above, the step of removing a noise may be configured to include a step of converting the image from an RGB mode to a gray mode, a step of extracting a contour image using the Morph gradient algorithm, a step of removing a noise using an adaptive threshold algorithm, a step of optimizing the image using Morph close and long line remove algorithms, and a step of extracting a contour. However, the notation of the algorithm used for the noise removing process is merely an exemplary embodiment of the present disclosure, so that it does not exclude the usage of another algorithm.

According to the exemplary embodiment of the present disclosure, the cooking ingredient may be roughly recognized by two steps. That is, the recognition of the cooking ingredient may be configured to include a step of determining a category of a cooking ingredient, such as a convenience food, a meal kit, and a raw food material and a step of recognizing an ID of the product or recognizing an object of the raw food material based on a corresponding category, for example, a packaging design of the convenience food or the meal kit. However, in the case of the convenience food and the meal kit, the above two steps are simultaneously performed so that the ID of the product may be immediately recognized using an object image and a character represented on the product packaging design.

The recognition of the raw food material is based on the object recognition in the image and include recognition of a plurality of cooking ingredients. Further, the recognition of the plurality of cooking ingredients may include recognition of a product with a trade mark. According to an exemplary embodiment of the present disclosure, the vision recognizing process may be performed using the artificial intelligence model. Specifically, the image classification, the object recognition, and the character recognition processes may be performed using the artificial neural network which performs the machine learning.

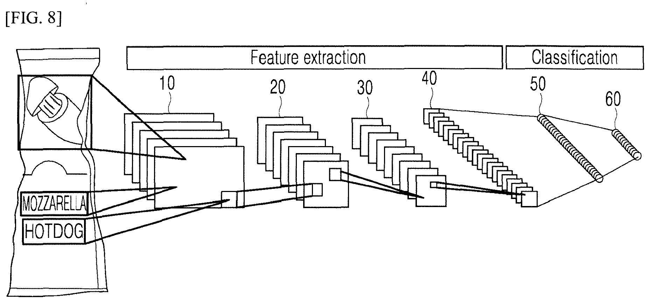

FIG. 8 is an exemplary diagram of vision recognition using an artificial intelligence model according to an exemplary embodiment of the present disclosure.

Referring to FIG. 8, a structure of a convolutional neural network (CNN) which performs the machine learning has been illustrated.

The CNN may be divided into an area where a feature of the image is extracted and an area where classification is performed. The feature extracting area is configured by laminating a plurality of convolution layers 10 and 30 and a plurality of pooling layers 20 and 40. The convolution layers 10 and 30 are essential components which reflect an activation function after applying a filter to the input data. The pooling layers 20 and 40 which are located next to the convolution layers 10 and 30 are selective layers. At the end of the CNN, a fully connected layer 60 for image classification is added. A flatten layer 50 which changes the configuration of images into an arranged configuration is located between a portion of extracting a feature of the image and an area which classifies the image.

The CNN calculates a convolution while a filter circulates the input data for extraction of the feature of the image and creates a feature map using the calculating result. A shape of the output data is changed in accordance with a size of a convolution layer filter, a stride, whether to apply padding, or a max pooling size.

When the cooking ingredient corresponds to a product such as a convenience food or a meal kit in step S112, the cooker control device 100 may display expiration date information, health information, and additional information for the cooking ingredient in step S120.

When the cooking ingredient includes a raw food material, the cooker control device 100 may receive cooking ingredient information from the user in step S114.

According to the exemplary embodiment of the present disclosure, the cooking ingredient information refers to information which replaces or supplements the recognition of the cooking ingredient. The scope of the cooking ingredient information may include various codes represented in the cooking ingredient, for example, a barcode, a QR code, a food name input by the user, and a cooking ingredient name or a code corresponding thereto. Therefore, even though the cooking ingredient is recognized, cooking ingredient information for an additional cooking ingredient may be additionally input.

The cooker control device 100 may select a cooker in accordance with a cooking ingredient or cooking ingredient information in step S130. A recipe regarding the cooking ingredient may include cooker information. For example, when the recipe is changed depending on the type of the cooker, input of the cooker information by selecting the cooker may be requested. When an initial cooker registration process is performed to select the cooker, the selection of the cooker may be omitted.

The cooker control device 100 detects a corresponding recipe based on the cooking ingredient or cooking ingredient information in step S140.

The recipe may be configured to include cooking ingredient information, cooker information, and detailed information about a cooking method. Further, each recipe may correspond to a cooking instruction for usage of the cooker in accordance with the amount of the cooking ingredient. For example, when cooking for two or three servings is performed using an oven with a specific number, a process of heating for 40 minutes as a first course and a process of heating for 10 minutes as a second course may correspond to a recipe for a meal kit for cooking "Braised short ribs".

The cooker control device 100 controls the operation of the cooker in accordance with the cooking instruction corresponding to the recipe in step S150.

The cooker operation control may be configured to include inputting of the cooking instruction through the cooker control device 100 or the cooker 300. For example, the user interface (UI) for executing the cooking instruction corresponding to the recipe is displayed on the cooker control device 100 and the user may select the cooking instruction from the UI to transmit the corresponding cooking instruction to the cooker 300.

As another method, a cooking code corresponding to the recipe is displayed on the cooker control device 100 and a cooking code which executes the cooking instruction in accordance with the user input is directly input to the cooker 300.

Here, the cooking instruction which is transmitted to the cooker 300 may have two major features. For example, the cooking instruction may be an instruction of executing a cooking program stored in the cooker, corresponding to the recipe, or at least one operating instruction regarding an operating method of the cooker included in the program stored in the cooker control device, corresponding to the recipe. In the former, the cooking instruction included in the program stored in the cooker 300 is executed and in the latter, the cooking instruction included in the program stored in the cooker control device 100 is executed. For both examples, the cooking instruction may be modified in accordance with the taste of the user, but in the former, it is inconvenience because the previous instruction needs to be cancelled. In contrast, in the latter, the cooking instruction may be modified by modifying the program without causing the inconvenience.

As an example of the modification of the cooking instruction, a UI for changing a cooking time may be displayed on the cooker control device 100 after transmitting a primary cooking instruction to the cooker. Further, a secondary cooking instruction for shortening or extending the cooking time may be transmitted depending on the selection of the user. As described above, it is advantageous to select a texture of the noodles of the Ramen in accordance with the user's taste by changing the cooking time.

In the vision recognition based cooker control method according to the exemplary embodiment of the present disclosure, the cooker control device 100 may recognize a pattern of user's favorite recipe using the artificial intelligence model, for example, an artificial neural network which performs the machine learning and control the cooker 300 in accordance with the recognized recipe pattern.

Data on past cooking histories including parameter information which is selected or modified by the user may be collected during the cooking process using at least one cooking ingredient among the convenience food, the meal kit, and the raw cook material. Further, the artificial intelligence model stored in the cooker control device 100 may deduce a user's favorite cooking pattern by learning the collected data. The cooker control device 100 may transmit a cooking instruction which is determined by the artificial intelligence model in accordance with the deduced user's favorite cooking pattern to the cooker.

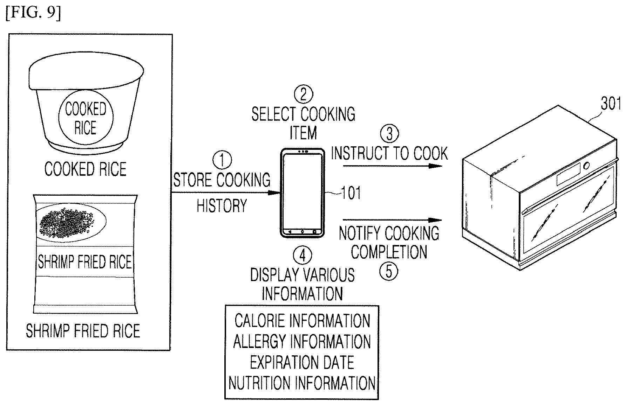

FIG. 9 is an exemplary diagram of an example which uses a cooking history according to an exemplary embodiment of the present disclosure.

Referring to FIG. 9, processes of storing a cooking history (1), selecting a cooking item (2), transmitting a cooking instruction (3), displaying various information (4), and notifying the completion of cooking (5) which are performed in the equipment 101 corresponding to the cooker control device 100 are displayed.

The process of recognizing the cooking ingredient may be simplified in some cases. For example, the recognizing of the cooking ingredient may include displaying of a past cooking history based on the vision recognition. Further, the controlling of the operation of the cooker may include transmitting of a cooking instruction of a cooking item selected by the user from the past cooking history to the cooker.

That is, the user may control the cooker by selecting a cooking item from the past cooking history without performing the vision recognizing process.

The cooker control device 100 may selectively display or provide various information in step S160.

For example, the cooker control device 100 may provide cooking ingredient purchase information in step S161.

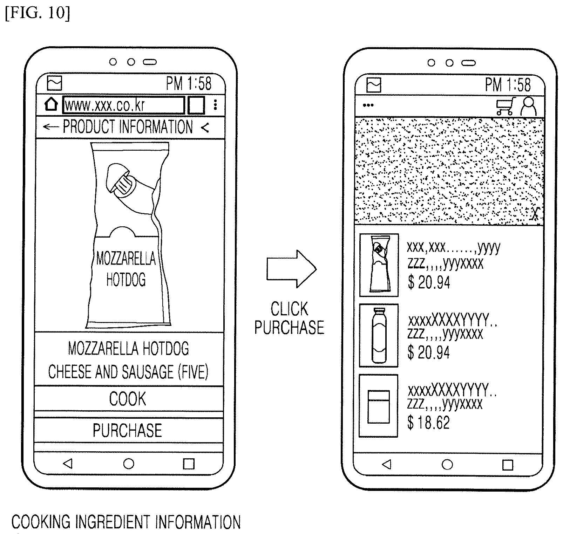

FIG. 10 is an exemplary diagram of an example which displays purchase information of cooking ingredients according to an exemplary embodiment of the present disclosure.

Referring to FIG. 10, the cooking ingredient is recognized and a UI for inputting a cooking instruction for the recognized cooking ingredient and a UI for on-line purchase are displayed. The cooker control device 100 may display a recipe and explanation for the cooking process in step S162. Before starting the cooking, the recipe may be displayed in the cooker control device 100 by a text or a video and in accordance with the cooking progress, explanation for sub steps which configure the cooking process may be displayed in the cooker control device 100.

The cooker control device 100 may notify the user of the completion of the cooking through a notifying function in step S170. The completion of the cooking may be directly notified by the cooker 300 to the cooker control device 100 or indirectly notified to the cooker control device 100 through the server 400.

The cooker control method S120 according to the exemplary embodiment of the present disclosure may be performed by the interworking of the cooker control device 100 and the server 400.

FIG. 11 is a flowchart of data of a vision recognition based cooker control method according to an exemplary embodiment of the present disclosure.

Referring to FIG. 11, a data flow between the cooker control device 100, the server 400, and the cooker 300 is illustrated.

A control application is executed in the cooker control device 100 in step S101 and the cooker control device 100 and the server 400 are communicably connected to each other in step S102.

Starting from user login in step S103, the cooking ingredient is recognized between the cooker control device 100 and the server 400 in step S110, and cooking ingredient information is input and the input information may be transmitted to the server 400 in step S114. In this case, the vision recognition process is processed by the server 400 and only the vision recognition result is transmitted to the cooker control device 100.

The server 400 detects the cooking information using the cooking ingredient or cooking ingredient information by searching for a DB. The cooker control device 100 receives and displays the detected cooking information.

The cooker selection process S130 is performed between the cooker control device 100 and the server 400 so that the server 400 and the selected cooker 300 may be communicably connected to each other.

The recipe searching process S140 is performed between the cooker control device 100 and the server 400 in step S140 so that the cooker control device 100 requests the server to transmit the cooking instruction in accordance with preparation of the cooking by the user in step S151.

In accordance with the request of the cooker control device 100, the server 400 may transmit the cooking instruction to the cooker 300 in step S152. The cooking starts by the cooker 300 in accordance with the cooking instruction and when the cooking is completed in accordance with the elapse of the time, the cooker 300 transmits the information on the completion of the cooking to the server 400. The server 400 receives this signal and transmits the information on the completion of the cooking to the cooker control device 100. The cooker control device 100 receives the information on the completion of the cooking and notifies the user through the cooking completion notification in step S170.

In the above process, in addition to the communicable connection between the server 400 and the cooker 300, a communicable connection between the cooker control device 100 and the cooker 300, for example, a pairing step for short range wireless communication may be further included. In a state in which the short-range wireless communication is connected, the information on the completion of the cooking may be directly transmitted from the cooker 300 to the cooker control device 100.

The cooker control method S120 according to the exemplary embodiment of the present disclosure may be performed by the cooker control device 100 and the server 400 may assist the operation of the cooker control device.

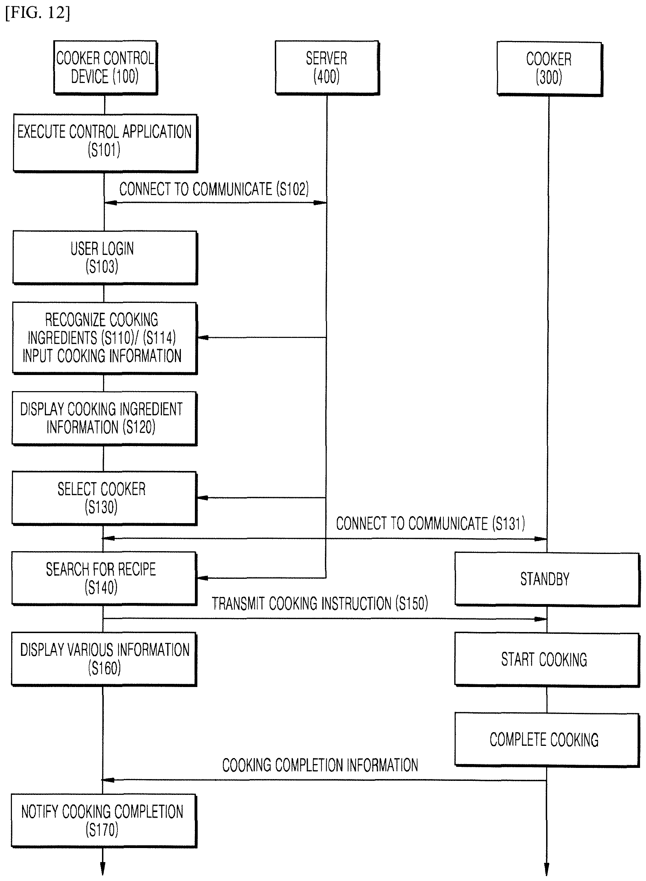

FIG. 12 is a flowchart of data of a vision recognition based cooker control method according to an exemplary embodiment of the present disclosure.

Referring to FIG. 12, the difference from FIG. 10 is that the server 400 performs the recognizing of cooking ingredients in step S110, the selecting of a cooker in step S130, and the searching of a recipe in step S140, instead of the cooker control device 100, but is not communicably connected to the cooker 300. The cooker control device 100 and the cooker 300 are communicably connected in step S131 to allow the cooker control device 100 to directly transmit the cooking instruction to the cooker 300. The cooker 300 directly receives the cooking instruction from the cooker control device 100 and performs the corresponding operation to start and complete the cooking. The information on the completion of the cooking may also be directly transmitted from the cooker 300 to the cooker control device 100.

The cooker control method S120 according to the exemplary embodiment of the present disclosure may be performed by the cooker control device 100 without intervention or assistance of the server 400.

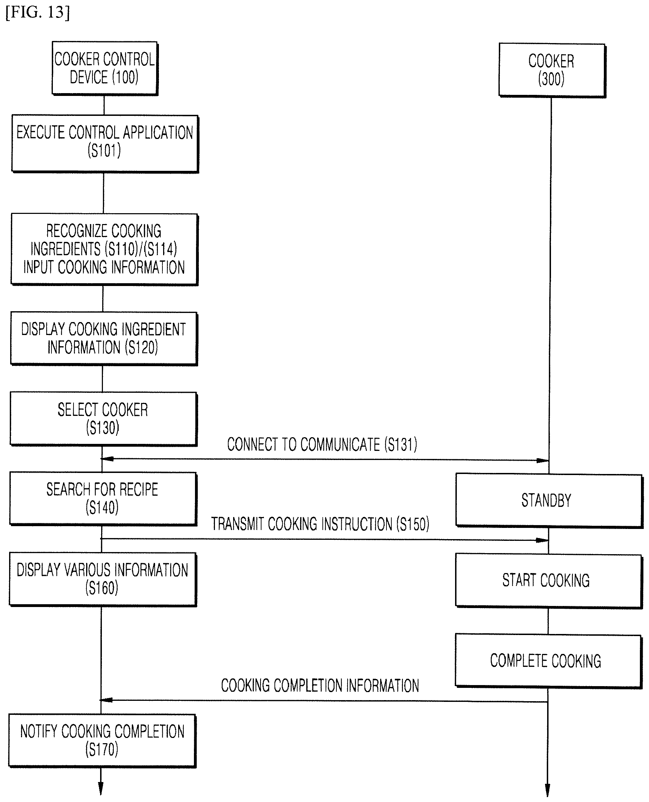

FIG. 13 is a flowchart of data of a vision recognition based cooker control method according to an exemplary embodiment of the present disclosure.

Referring to FIG. 13, the difference from FIG. 11 is that the cooker control device 100 solely performs the recognizing of cooking ingredients in step S110, the selecting of a cooker in step S130, and the searching of a recipe in step S140. Here, the cooker control device 100 downloads and stores various engines and data required to recognize the cooking ingredients, select the cooker, and search for the recipe, from the server 400 and uses the engines and data.

According to the vision recognition based cooker control method S100 according to the exemplary embodiment of the present disclosure, a business model may be formed between a cooker manufacturer, a cooking ingredient manufacturer, and a cooking ingredient provider.

The cooker manufacturer may develop various cooking ingredients and cooker usage recipes together with the cooking ingredient manufacturer and construct a DB therefor.

The cooking ingredient manufacturer may stably provide the products to the user through the cooking ingredient provider.

The cooking ingredient provider may supply cooker usable cooking ingredients together with the cooker manufacturer.

As described above, the vision recognition based cooker control device according to various exemplary embodiments of the present disclosure may recognize the cooking ingredients through the vision recognition and control the cooking of the cooker in accordance with the recipe of the recognized cooking ingredient.

According to the exemplary embodiment of the present disclosure, it is possible to recognize cooking ingredients of a convenience food and a meal kit using vision recognition and cook using the cooking ingredients in accordance with a detected recipe.

Further, in addition to the cooking method according to a recipe of the cooking ingredients, detailed information and purchase information about the cooking ingredients may be provided to the user.

Further, a cooker control device may indirectly or directly control the operation of the cooker via a server using wireless communication.

The example embodiments described above may be implemented through computer programs executable through various components on a computer, and such computer programs may be recorded in computer-readable media. Here, the medium may include magnetic media such as hard discs, floppy discs, and magnetic tapes, optical media such as CD-ROM and DVD, magneto-optical media such as floptical disc, and hardware devices specially configured to store and perform program codes, such as ROM, RAM, and flash memory.

The computer programs may be specially designed and constructed for the purposes of the present disclosure or they may be of the kind well known and available to those skilled in the computer software arts. Examples of the computer program may include not only machine language codes generated by compilers but also high-level language codes that can be executed by computers using interpreters.

The singular forms "a," "an" and "the" in this present disclosure, in particular, claims, may be intended to include the plural forms as well. Unless otherwise defined, the ranges defined herein is intended to include any invention to which values within the range are individually applied and may be considered to be the same as individual values constituting the range in the detailed description of the present invention.

Operations constituting the method of the present invention may be performed in appropriate order unless explicitly described in terms of order or described to the contrary. The present invention is not necessarily limited to the order of operations given in the description. All examples described herein or the terms indicative thereof ("for example", etc.) used herein are merely to describe the present disclosure in greater detail. Therefore, it should be understood that the scope of the present disclosure is not limited to the example embodiments described above or by the use of such terms unless limited by the appended claims. Furthermore, those skilled in the art will readily appreciate that many alternation, combination and modifications, may be made according to design conditions and factors within the scope of the appended claims and their equivalents.

The present disclosure is thus not limited to the example embodiments described above, and rather intended to include the following appended claims, and all modifications, equivalents, and alternatives falling within the idea and scope of the following claims.

## Claims

1. A device (100) configured to control a cooker (300), the device (100) comprising:
a user input interface (120) configured to receive cooking ingredient information;
a communicator configured to communicate with at least one of the cooker (300) or a server which relays control of the cooker (300); and
a processor (130, 180) configured to:
recognize a cooking ingredient based on vision recognition;
detect a corresponding recipe based on the cooking ingredient or the cooking ingredient information; and
control transmission of a cooking instruction corresponding to the recipe to the cooker (300).

2. The device (100) according to claim 1, wherein the processor (130, 180) is further configured to:
determine a category of the cooking ingredient among categories including at least a convenience food, a meal kit, and a raw food material based on a processed degree; and
recognize an identification (ID) of a product based on a visually recognized packaging design of the convenience food or the meal kit or recognize the raw food material.

3. The device (100) according to claim 1 or 2, wherein the user input interface (120) is further configured to:
receive a code for distinguishing the cooking ingredient; or
receive raw food material information from a user.

4. The device (100) according to any one of the preceding claims, further comprising:
a display (151) configured to display a user interface (UI) for executing the cooking instruction corresponding to the recipe,
wherein the processor (130, 180) is further configured to control the transmission of the cooking instruction to the cooker (300) in response to a user input received via the UI.

5. The device (100) according to any one of the preceding claims, further comprising:
a display (151) configured to display a cooking code corresponding to the recipe to input the cooking code to the cooker (300).

6. The device (100) according to any one of the preceding claims , further comprising a display, wherein the processor (130, 180) is further configured to:
cause the display (151) to display a user interface (UI) for changing a cooking time after transmitting a primary cooking instruction to the cooker (300); and
control transmission of a secondary cooking instruction for shortening or extending a cooking time to the cooker (300) based on a user input received via the UI.

7. The device (100) according to any one of the preceding claims , further comprising a display, wherein the processor (130, 180) is further configured to:
cause the display (151) to display a past cooking history based on vision recognition; and
control transmission of a cooking instruction for a cooking item, which is selected by a user from the past cooking history, to the cooker (300).

8. The device (100) according to any one of the preceding claims, wherein the cooking instruction is determined by an artificial intelligence model according to a user's favorite cooking pattern deduced by data learning for a past cooking history including parameter information selected or modified by the user during a cooking process using at least one of a convenience food, a meal kit, or a raw food material.

9. The device (100) according to any one of the preceding claims, further comprising:
a display (151) configured to display various information regarding the control of the cooker (300),
wherein the processor (130, 180) is further configured to:
cause the display (151) to display at least one of: at least expiration date information and health information; purchase information for the cooking ingredient; or the recipe; and
cause the display (151) to display the recipe by at least one of:
displaying the recipe as a text or a video before cooking starts; or
displaying an explanation for a sub-step configuring a cooking process in accordance with a cooking progress.

10. A method for controlling a cooker (300), the method comprising:
recognizing a cooking ingredient based on visual recognition or receiving cooking ingredient information;
detecting a recipe based on the cooking ingredient or the cooking ingredient information; and
controlling an operation of the cooker (300) according to a cooking instruction corresponding to the detected recipe.

11. The method according to claim 10, further comprising:
receiving information about the cooker (300) to be used for cooking.

12. The method according to claim 10 or 11, wherein the controlling the operation of the cooker (300) comprises:
displaying a cooking code corresponding to the recipe; and
inputting the cooking code for executing the cooking instruction according to a user input received in response to the displayed cooking code.

13. The method according to any one of claims 10 to 12, wherein:
the cooking instruction causes execution of a cooking program stored in the cooker (300); or
the cooking instruction is at least one operating instruction regarding an operating method of the cooker (300) included in a program stored in the control device (100).

14. The method according to any one of claims 10 to 13, wherein the controlling the operation of the cooker (300) comprises:
transmitting a cooking instruction determined by an artificial intelligence model to the cooker (300) according to a user's favorite cooking pattern deduced by data learning for a past cooking history including parameter information selected or modified by the user during a cooking process using at least one of a convenience food, a meal kit, or a raw food material.

15. The method according to any one of claims 10 to 14, further comprising at least one of:
displaying at least expiration date information and health information of the cooking ingredient;
providing purchase information for the cooking ingredient to a user; or
displaying the recipe,
wherein the recipe is displayed by at least one of:
displaying the recipe as a text or a video before cooking starts; or
displaying an explanation for sub-steps configuring a cooking process in accordance with a cooking progress.
